# FASCICULE DE BREVET EUROPEEN

(11) **EP 4 240 950 B1**
(45) Date de publication et mention de la délivrance du brevet: **28.08.2024**
(21) Numéro de dépôt: 21811414.8
(22) Date de dépôt: 02.11.2021
(51) Int. Cl.: F02C 7/36, F01D 5/02

(54) **MODULARITE D'UNE TURBOMACHINE D'AERONEF**
MODULARITÄT EINER FLUGZEUGTURBOMASCHINE
MODULARITY OF AN AIRCRAFT TURBOMACHINE

(30) Priorité: 04.11.2020 FR 2011338
(43) Date de publication de la demande: 13.09.2023
(73) Titulaire: SAFRAN AIRCRAFT ENGINES, 75015 Paris (FR)
(72) Inventeur: LEVISSE, Paul Ghislain Albert, 77550 MOISSY-CRAMAYEL (FR); BELMONTE, Olivier, 77550 MOISSY-CRAMAYEL (FR)
(74) Mandataire: Gevers & Orès
(86) Numéro de dépôt international: PCT/FR2021/051913
(87) Numéro de publication internationale: WO 2022/096813

(56) Documents cités:
- WO-A1-2015/075345
- FR-A1- 2 975 149
- US-A- 3 469 868
- US-A- 3 631 688
- US-A- 3 958 887

## Description

### Domaine technique de l'invention

La présente invention concerne des solutions pour faciliter la modularité d'une turbomachine d'aéronef.

### Arrière-plan technique

L'état de la technique comprend notamment les documents WO-A1-2015/075345, US-A-3,631,688, FR-A1-2 975 149, US-A-3 958 887 et US-A-3,469,868.

Une turbomachine d'aéronef est souvent réalisée sous la forme d'un assemblage de modules qui peuvent chacun comporter des parties fixes et des parties mobiles. Un module est défini comme un sous-ensemble d'un moteur qui présente des caractéristiques géométriques au niveau de ses interfaces avec les modules adjacents suffisamment précises pour qu'il puisse être livré individuellement, et qui a subi un équilibrage distinct lorsqu'il comporte des parties tournantes. L'assemblage des modules permet de constituer un moteur complet, en réduisant au maximum les opérations d'équilibrage et d'appariement des pièces en interface.

La modularité d'une turbomachine est un élément clé pour sa maintenance. En effet, lors d'une intervention, Il faut que les pièces soient accessibles facilement sans avoir à démonter un nombre important de parties du moteur. Dans la pratique, on essaye d'obtenir un découpage en quelques modules majeurs. Par exemple pour une turbomachine à soufflante amont (les termes « amont » et « aval » s'apprécient par rapport à l'écoulement des gaz dans la turbomachine), on cherche un découpage en trois modules : un premier module majeur pour la partie avant comprenant la soufflante et le compresseur BP, un deuxième module majeur pour la partie comprenant le corps HP et un troisième module majeur pour la partie arrière du moteur comprenant la turbine BP et l'arbre BP. On comprend ainsi que le corps BP est divisé en deux modules.

Les deux modules du corps BP sont fixés l'un à l'autre grâce à un écrou qui s'étend autour de l'axe de la turbomachine et qui sert à serrer axialement l'arbre de soufflante sur l'arbre BP.

Lors d'une opération de maintenance, cet écrou doit être dévissé au moyen d'un outil qui est inséré dans la turbomachine le long de son axe longitudinal, et donc à l'intérieur de l'arbre BP et/ou de l'arbre de soufflante.

Cette maintenance est particulièrement difficile sur une turbomachine comprenant un réducteur dans la partie avant ou amont. Le problème dans ce cas est l'accessibilité à l'écrou. Le réducteur est situé en amont de l'écrou et doit être partiellement démonté pour avoir accès à l'écrou. Par ailleurs, l'accès à l'écrou doit être réalisé avec des outils complexes qui présentent des risques de mauvaise manipulation et d'endommagement du moteur.

Dans ce cas, la modularité du premier module majeur est perdue. De plus, il faut désolidariser le deuxième module majeur et le troisième module majeur de manière indépendante.

La modularité du premier module est toutefois importante lorsque ce module comprend un réducteur. En effet, le réducteur est logé dans une enceinte de lubrification qui doit de préférence restée fermée lors d'une opération de maintenance pour éviter toute fuite d'huile. Pour éviter de démonter cette enceinte, on a donc tendance à augmenter le diamètre interne du réducteur pour qu'il soit supérieur au diamètre de l'écrou et ainsi permettre le démontage de l'écrou par l'intérieur du réducteur. Cette solution est toutefois pénalisante pour l'encombrement du réducteur et les performances générales de la turbomachine.

Afin d'améliorer leur rendement propulsif, les turbomachines tendent vers l'augmentation des taux de dilution, qui se traduit généralement par l'augmentation de la taille de la soufflante (diamètre et dimension axiale). Cela rend l'accès à l'écrou de l'arbre BP encore plus complexe par l'allongement de l'outil nécessaire pour y accéder.

Par ailleurs, certaines turbomachines, comme c'est le cas des turbomachines à soufflante unique non carénée (aussi appelé USF, acronyme de l'anglais *Unducted Single Fan*), ont une longueur particulièrement importante et les modules des corps HP et BP présentent des diamètres internes très petits, ce qui complexifie voire rend impossible l'accès à l'écrou par l'outil.

La présente invention propose une solution à au moins une partie des problèmes évoqués ci-dessus qui simplifie la modularité d'une turbomachine d'aéronef.

### Résumé de l'invention

Selon un premier aspect, l'invention concerne un ensemble d'arbres pour une turbomachine d'aéronef, selon la revendication 1, cet ensemble comportant :
- un premier arbre comportant des cannelures externes orientées parallèlement à un axe de rotation de l'arbre,
- un second arbre comportant des cannelures internes complémentaires desdites cannelures externes, ce second arbre étant engagé axialement sur le premier arbre et ces arbres étant solidaires en rotation par engagement de leurs cannelures, et
- un système de blocage axial des arbres l'un vis-à-vis de l'autre,
caractérisé en ce que ledit système comprend des vis qui sont orientées radialement par rapport audit axe, chacune de ces vis étant vissée dans un premier orifice de l'un des arbres et comportant une extrémité libre apte à être engagée dans un second orifice de l'autre des arbres, chacune de ces vis étant mobile par vissage depuis une première position radiale dans laquelle son extrémité libre est engagée dans ledit second orifice et assure un blocage axial des arbres, et une seconde position radiale dans laquelle son extrémité libre est désengagée dudit second orifice et assure un déblocage axial des arbres.

L'ensemble d'arbres selon l'invention est particulièrement adapté pour faciliter la modularité d'une turbomachine d'aéronef, et peut par exemple être utilisé dans l'interface entre deux modules d'un aéronef et plus particulièrement dans l'interface entre deux arbres de ces modules.

L'accouplement entre les deux arbres est réalisé par des cannelures. Les cannelures s'étendent parallèlement les unes aux autres et sont engagées les unes dans les autres par simple translation axiale du premier arbre dans le second arbre.

Il existe deux types d'accouplement par cannelures, un premier accouplement dans lequel les cannelures sont libres de coulisser axialement les unes dans les autres. Un premier inconvénient de cet accouplement est que les cannelures doivent être lubrifiées et il est donc nécessaire de prévoir un gicleur d'huile à proximité. Dans le cadre d'une turbomachine à réducteur, les cannelures pourraient être logées dans l'enceinte du réducteur en vue de sa lubrification mais le désengagement des cannelures lors d'une opération de maintenance entraînerait une ouverture de l'enceinte.

Le second type d'accouplement par cannelures est un accouplement dans lequel les cannelures sont bloquées axialement les unes dans les autres et c'est cette technologie qui est utilisée dans la présente invention. L'avantage est que les cannelures ne doivent pas être lubrifiées. Il faut toutefois prévoir un système de blocage axial des arbres et donc des cannelures les unes dans les autres.

Selon l'invention, ce blocage est assuré par des vis radiales. Autrement dit, les vis de blocage des arbres ne s'étendant pas parallèlement à l'axe mais radialement par rapport à cet axe. Les vis peuvent être régulièrement réparties autour de l'axe et leur nombre est adapté notamment en fonction des diamètres des arbres et du couple maximal à transmettre entre ces arbres.

L'ensemble selon l'invention peut comprendre une ou plusieurs des caractéristiques suivantes, prises isolément les unes des autres ou en combinaison les unes avec les autres :
- la première position est une position radialement externe, et la seconde position est une position radialement interne ;
- chacune des vis comprend une extrémité radialement interne portant une tête d'appui, et une extrémité radialement externe libre comportant une empreinte en creux configurée pour recevoir un outil de vissage/dévissage de la vis ;
- une bague est fixée dans chacun desdits seconds orifices et comprend un alésage interne qui présente une portion tronconique configurée pour coopérer avec ladite extrémité libre de la vis en vue du centrage de cette dernière dans ledit second orifice ; l'avantage de prévoir une bague de centrage dans chaque second orifice est que cette bague peut être remplacée en cas d'usure en limitant l'impact sur l'arbre ;

- chaque bague est sertie dans le second orifice correspondant ;
- une douille est montée dans chacun desdits premiers orifices et comprend un filetage interne de vissage de la vis correspondante ; l'avantage de prévoir une douille filetée dans chaque premier orifice est que cette douille peut être remplacée en cas d'usure en limitant l'impact sur l'arbre
- chaque douille comprend une collerette annulaire externe d'appui sur l'arbre correspondant ;
- une virole de retenue est montée à l'intérieur du premier arbre et comprend un premier rebord cylindrique qui s'étend au moins en partie en regard desdits premiers et seconds orifices et qui est configuré pour retenir radialement les vis lorsqu'elles sont dans leurs secondes positions respectives ;
- la collerette de chaque douille est intercalée radialement entre l'arbre et un second rebord cylindrique de la virole ; et
- la virole comprend une surface cylindrique externe de centrage configurée pour coopérer avec une surface cylindrique interne du premier arbre, cette surface cylindrique interne comportant une gorge annulaire de montage d'un jonc annulaire de retenue axiale de la virole vis-à-vis du premier arbre.

La présente invention concerne également une turbomachine d'aéronef, comportant au moins un ensemble tel que décrit ci-dessus.

Avantageusement, ledit ensemble est entouré par au moins un carter de stator qui comprend au moins un orifice radial configuré pour autoriser le passage d'un outil de vissage/dévissage desdites vis.

Un exemple concerne une turbomachine d'aéronef, cette turbomachine ayant un axe longitudinal et comportant :
- un corps haute pression appelé HP comportant un arbre HP de liaison d'un rotor de compresseur HP à un rotor de turbine HP, cet arbre HP s'étendant le long dudit axe,
- un corps basse pression appelé BP comportant un arbre BP de liaison d'un rotor de compresseur BP à un rotor de turbine BP, cet arbre BP s'étendant le long dudit axe et à l'intérieur de l'arbre HP,
- une soufflante reliée à un arbre de soufflante, et
- un réducteur à train épicycloïdal de liaison de l'arbre BP à l'arbre de soufflante,
caractérisé en ce que le corps BP comprend trois modules :
- un premier module comportant la turbine BP et l'arbre BP, l'arbre BP comportant une extrémité aval accouplée au rotor de la turbine BP,
- un second module comportant le compresseur BP et un tourillon solidaire du rotor du compresseur BP, ce tourillon étant configuré pour être accouplé en rotation à une extrémité amont de l'arbre BP et à être immobilisé axialement sur cette extrémité par vissage d'un écrou sur un filetage de l'arbre, et
- un troisième module comportant un arbre d'entrée du réducteur, cet arbre d'entrée comportant une extrémité amont d'accouplement à un solaire du réducteur et une extrémité aval comportant des premières cannelures qui sont orientées parallèlement audit axe et qui sont configurées pour être engagées dans des secondes cannelures complémentaires dudit second module, des vis orientées radialement étant portées par l'un des second et troisième modules et destinées à être engagées dans l'autre des second et troisième modules afin de bloquer axialement les premières et secondes cannelures les unes dans les autres.

Le corps BP de la turbomachine est ainsi divisé en trois modules et non plus deux comme dans la plupart des turbomachines de la technique antérieure. Le premier module, classique, comprend la turbine BP et l'arbre BP. Cet arbre BP s'étend le long de l'axe de la turbomachine et son extrémité aval est accouplée au rotor de la turbine BP.

Le second module comprend le compresseur BP dont le rotor est relié classiquement à un tourillon. Comme dans la technique antérieure, ce tourillon est engagé sur l'arbre BP et solidarisé à ce dernier par un écrou vissé axialement depuis l'amont. Ce second module est accouplé par des cannelures à un troisième module comportant l'arbre d'entrée du réducteur. Ces cannelures sont bloquées axialement par des vis radiales. Lorsque les vis sont en position dévissée, on comprend que le troisième module peut être démonté et retiré du second module.

Le troisième module avec le réducteur peut être démonté et retiré de la turbomachine avant de d'avoir accès à l'écrou de dévissage du second module vis-à-vis du premier module. Cela a pour avantage que le réducteur peut avoir un diamètre interne inférieur au diamètre de l'écrou qui n'est donc plus démonté par l'intérieur du réducteur. Les vis de blocage des second et troisième modules sont orientées radialement et peuvent donc être dévissées par un outil orienté dans la même direction et qui n'est pas non plus gêné par le réducteur.

La turbomachine selon l'exemple peut comprendre une ou plusieurs des caractéristiques suivantes, prises isolément les unes des autres ou en combinaison les unes avec les autres :
- la soufflante est du type non caréné ;
- le réducteur est situé dans une enceinte de lubrification, lesdites premières et secondes cannelures étant situées à l'extérieur de cette enceinte ;
- les premières et secondes cannelures sont intercalées axialement entre deux joints annulaires d'étanchéité de l'enceinte, qui sont montés entre l'arbre d'entrée et un capot annulaire de l'enceinte monté autour de l'arbre d'entrée ;
- un premier des joints d'étanchéité, situé à l'amont des premières et secondes cannelures, est un joint radial segmenté, et un second des joints segmentés, situé à l'aval des premières et secondes cannelures, est un joint à labyrinthe ;
- l'un des joints d'étanchéité est intercalé axialement entre lesdites première et secondes cannelures, d'une part, et lesdites vis, d'autre part ;
- le second module comprend une portion amont d'arbre comportant lesdites secondes cannelures et des orifices de montage desdites vis, et une portion aval d'arbre accouplée ou reliée audit tourillon, lesdites portions d'arbres comportant des brides annulaires fixées entre elles par des vis orientées parallèlement audit axe ;
- la portion amont d'arbre comprend une première paroi annulaire radiale dont la périphérie externe est reliée à une première des brides, la portion aval d'arbre comprend une seconde paroi annulaire radiale dont la périphérie externe est reliée à une seconde des brides, lesdites première et seconde parois annulaires s'étendant en regard l'une de l'autre et conférant une capacité de déformation en flexion au second module en fonctionnement ; ce type de liaison confère une certaine souplesse au module et est couramment appelé « *flex coupling* » ; et
- la turbomachine comprend un carter de stator qui entoure les corps BP et HP et qui comprend au moins un orifice radial configuré pour autoriser le passage d'un outil de vissage/dévissage desdites vis radiales.

Un autre exemple concerne un procédé de démontage d'une turbomachine telle que décrite ci-dessus, caractérisé en ce qu'il comprend les étapes de :
- dévissage des vis radiales de façon à débloquer axialement lesdites premières et secondes cannelures,
- retrait du troisième module vis-à-vis du second module,
- dévissage de l'écrou depuis l'intérieur de la soufflante et du réducteur, et
- retrait du second module vis-à-vis du premier module.

Avantageusement, les vis radiales sont dévissées grâce à au moins un outil de dévissage qui est inséré à travers le ou chaque orifice du carter.

### Brève description des figures

D'autres caractéristiques et avantages de l'invention apparaitront au cours de la lecture de la description détaillée qui va suivre pour la compréhension de laquelle on se reportera aux dessins annexés dans lesquels :
[Fig.1] la figure 1 est une demi vue schématique en coupe axiale d'une turbomachine d'aéronef ;
[Fig.2] la figure 2 est une vue schématique en perspective et en coupe axiale d'un ensemble d'arbres au sens d'un aspect de l'invention ;
[Fig.3] la figure 3 est une vue schématique en coupe de l'ensemble de la figure 2 ;
[Fig.4] la figure 4 est une vue schématique en perspective d'un système de blocage axial de cannelures de l'ensemble de la figure 2, et montre des vis dans une position de déblocage,
[Fig.5] la figure 5 est une vue schématique en coupe du système de blocage axial avec les vis dans la position de déblocage,
[Fig.6] la figure 6 est une vue schématique en coupe du système de blocage axial avec les vis dans une position de blocage,
[Fig.7] la figure 7 est une vue à plus grande échelle d'une partie de la figure 6 ;
[Fig.8] la figure 8 est une vue similaire à celle de la figure 1 et illustre une première étape d'un procédé selon l'invention de démontage d'une turbomachine d'aéronef ;
[Fig.9] la figure 9 est une vue à plus grande échelle d'une partie de la figure 8 ; et
[Fig.10a-10c] les figures 10a à 10c sont des vues similaires à celles de la figure 1 et illustrent d'autres étapes du procédé de démontage.

### Description détaillée de l'invention

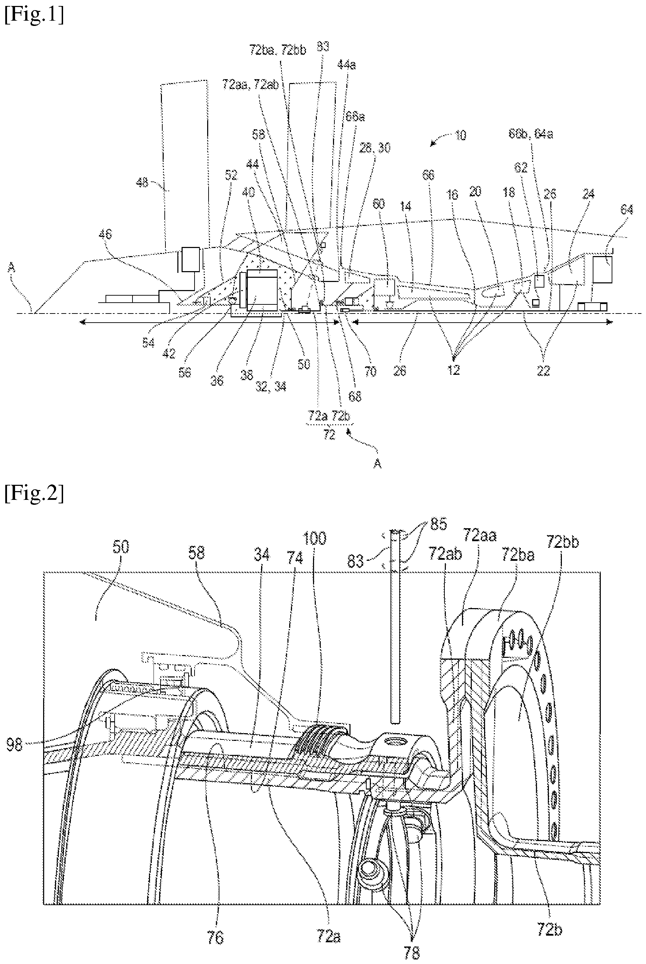

On se réfère d'abord à la figure 1 qui illustre une turbomachine d'aéronef qui est ici une turbomachine 10 à soufflante unique non carénée (USF) bien que les aspects de l'invention ne soient pas limités à ce type particulier de turbomachine.

La turbomachine 10 est modulaire et comprend plusieurs modules assemblés les uns aux autres. La référence A désigne l'axe longitudinal de la turbomachine 10 qui est en général l'axe de rotation de ses rotors.

Un premier module 12 est un module haute pression ou HP et comprend un compresseur HP 14 et une turbine HP 18. Le rotor du compresseur HP 14 est relié par un arbre HP 16 au rotor de la turbine HP 18. Ce module HP 12 comprend en outre la chambre annulaire de combustion 20 qui est intercalée axialement entre le compresseur HP 14 et la turbine HP 18.

Le corps basse pression ou BP de la turbomachine 10 est lui-même divisé en trois modules :
- un premier module 22 comportant la turbine BP 24 et l'arbre BP 26, l'arbre BP comportant une extrémité aval accouplée au rotor de la turbine BP,
- un second module 28 comportant le compresseur BP 30,
- et un troisième module 32 comportant l'arbre d'entrée 34 d'un réducteur 36 de la turbomachine.

La turbomachine 10 est en effet équipée d'un réducteur 36 à train épicycloïdal qui comprend classiquement un solaire 38 centré sur l'axe A, une couronne 40 qui s'étend autour du solaire 38, et des satellites qui sont disposés entre le solaire et la couronne et qui sont engrenés avec eux et portés par un porte-satellites 42. Dans le cas présent, la couronne 40 est immobile et fixée à un stator de la turbomachine qui est ici un carter d'entrée 44. Le solaire 38 est mobile en rotation et accouplé à l'arbre d'entrée 34, et le porte-satellites 42 est également mobile en rotation et accouplé à un arbre 46 de la soufflante 48. La soufflante 48 est donc entraînée en rotation par l'arbre d'entrée 34 par l'intermédiaire du réducteur 36.

Le réducteur 36 est situé dans une enceinte de lubrification 50 qui s'étend autour de l'axe A et a donc une forme générale annulaire. A sa périphérie interne, l'enceinte 50 est délimitée par l'arbre de soufflante 46 et l'arbre d'entrée 34. A sa périphérie externe, l'enceinte 50 est délimitée par le carter d'entrée 44 qui s'étend autour du réducteur 36. A son extrémité amont, l'enceinte 50 est délimitée par un support annulaire 52 de paliers 54, 56. Ce support 52 a une périphérie externe qui est fixée au carter d'entrée 44 et une périphérie interne qui maintient des bagues de roulement des paliers à roulement 54, 56, dont des bagues internes sont fixées à l'arbre de soufflante 46. Enfin, l'enceinte 50 est fermée à son extrémité aval par un capot annulaire 58 qui est porté par le carter d'entrée 44 et dont la périphérie interne entoure de manière étanche l'arbre d'entrée 34.

Un carter intermédiaire 60 est intercalé entre les compresseurs BP 30 et HP 14, un carter inter-turbine 62 est intercalé entre les turbines HP 18 et BP 24, et un carter d'échappement 64 est situé en aval de la turbine BP 24.

Le compresseur BP 28 et le module HP 12 sont entourés par un carter annulaire 66 dont une extrémité amont comprend une bride annulaire 66a de fixation à une bride annulaire 44a du carter d'entrée 44, et dont une extrémité aval comprend une bride annulaire 66b de fixation à une bride annulaire 64a du carter d'échappement 64.

En plus du compresseur BP 30, le second module 28 comprend un tourillon 68 qui est solidaire en rotation du rotor du compresseur BP et qui est configuré pour être accouplé en rotation à une extrémité amont de l'arbre BP 26 et être immobilisé axialement sur cette extrémité par vissage d'un écrou 70 sur un filetage de l'arbre BP 26.

Dans l'exemple représenté, le tourillon 68 est engagé axialement depuis l'amont sur l'extrémité amont de l'arbre BP 26. L'écrou 70 est engagée axialement depuis l'amont sur l'extrémité amont de l'arbre 26 et est vissé jusqu'à serrer axialement le tourillon 68 contre un épaulement annulaire ou analogue de l'arbre 26.

Bien que schématique, la figure 1 permet de constater que l'écrou 70 a un diamètre qui est supérieur au diamètre interne de l'arbre d'entrée 34. Cela signifie que cet arbre d'entrée 34 doit être démonté et retiré afin de pouvoir retirer l'écrou 70.

Le second module 28 comprend en outre un arbre 72 divisé en deux portions 72a, 72b respectivement amont et aval. Les portions d'arbre 72a, 72b sont fixées entre elles par bridage.

La portion amont 72a est accouplée à l'arbre d'entrée 34 et comprend à son extrémité aval une bride radialement externe de fixation 72aa. Cette bride 72aa est située à la périphérie externe d'une paroi annulaire radiale 72ab de l'extrémité aval de la portion 72a.

La portion aval 72b est solidarisée en rotation au tourillon 68 et au rotor du compresseur BP 30 et comprend à son extrémité amont une bride radialement externe de fixation 72ba. Cette bride 72ba est située à la périphérie externe d'une paroi annulaire radiale 72bb de l'extrémité amont de la portion 72b. Les brides 72aa, 72ba sont appliquées axialement l'une contre l'autre et comprennent des orifices axiaux de montage de vis axiales (non visibles) de fixation des brides entre elles. Cette configuration des brides 72aa, 72ba et des parois radiales 72ab, 72bb permet de réaliser une liaison avec une certaine souplesse. Ainsi, l'arbre peut supporter un désalignement entre les parties amont et aval, ce qui est particulièrement intéressant dans le cas d'un moteur relativement long

L'invention propose une solution pour faciliter la modularité de la turbomachine 10 grâce à un dispositif particulier d'accouplement des modules 28, 32 et en particulier de l'arbre 72 du second module 28 avec l'arbre d'entrée 34 du troisième module 32.

Les figures 2 à 7 illustrent un mode de réalisation de ce dispositif dans lequel les éléments déjà décrits dans ce qui précède sont désignés par les mêmes références.

L'arbre d'entrée 34 du module 32 est accouplé à l'arbre 72 du module 28 et plus spécifiquement à la portion d'arbre 72a par un accouplement à cannelures 74, 76. L'arbre d'entrée 34 comprend au voisinage de son extrémité aval des cannelures internes 74 qui sont orientées parallèlement à l'axe A et qui sont configurées pour être engagées sur des cannelures externes 76 complémentaires de la portion d'arbre 72a.

L'accouplement par cannelures 74, 76 est ici du type à blocage axial et ce blocage est ici assuré par des vis 78 orientées en direction radiale par rapport à l'axe A.

Les vis 78 sont de préférence régulièrement réparties autour de l'axe A. Leur nombre est par exemple compris entre 6 et 12.

Chacune des vis 78 est portée par et vissée dans l'un des arbres 34, 72 et destinée à être engagée dans l'autre des arbres afin de bloquer axialement les cannelures 74, 76 les unes dans les autres. On comprend que chaque vis 78 est mobile en direction radiale par vissage depuis une première position radiale de blocage axial des arbres jusqu'à une seconde position radiale de déblocage axial des arbres, et inversement.

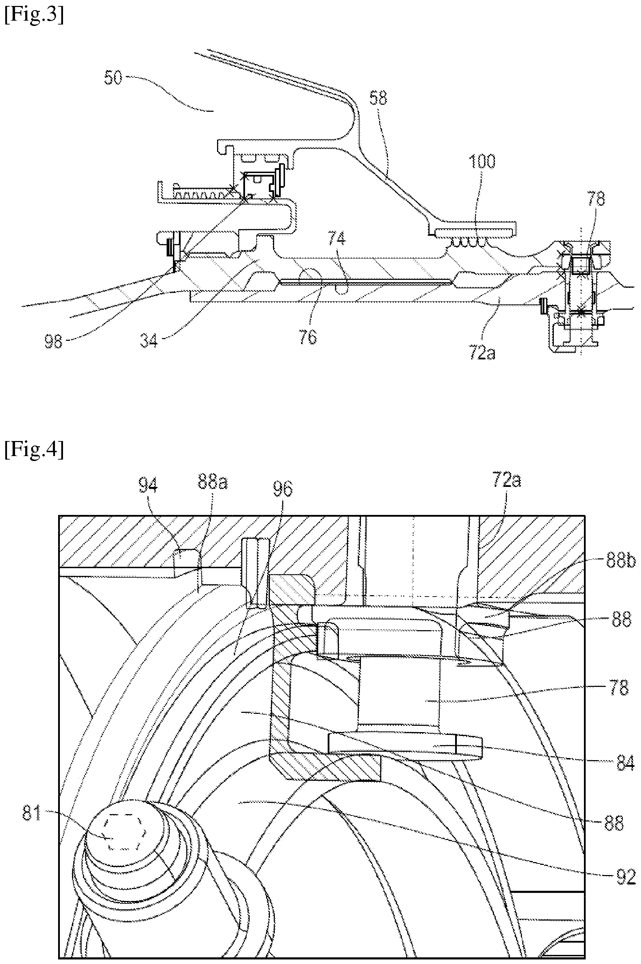

Dans l'exemple représenté, comme cela est mieux visible aux figures 4 à 7, chaque vis 78 est vissée dans un orifice 80 de la portion d'arbre 72a et comporte une extrémité libre apte à être engagée dans un orifice 82 de l'arbre 34. Chaque vis 78 est mobile par vissage depuis la première position radiale précitée, qui est une position radialement externe de vissage et de serrage de la vis, jusqu'à la seconde position radiale précitée, qui est une position radialement interne de dévissage et desserrage.

Chaque vis 78 comprend un corps fileté de forme allongé le long d'un axe radial par rapport à l'axe A, et dont une extrémité longitudinale (radialement externe) est libre et dont l'extrémité longitudinale opposée (radialement interne) est reliée à une tête 84. Le corps de chaque vis 78 est destiné à être vissé dans un des orifices 80, la tête 84 de chaque vis est destinée à prendre appui sur la portion d'arbre 72a dans la première position de serrage, et l'extrémité libre de chaque vis est destinée à être engagée dans un des orifices 82 de l'arbre 34 dans cette première position en vue du blocage axial des cannelures 74, 76 et des arbres 34, 72.

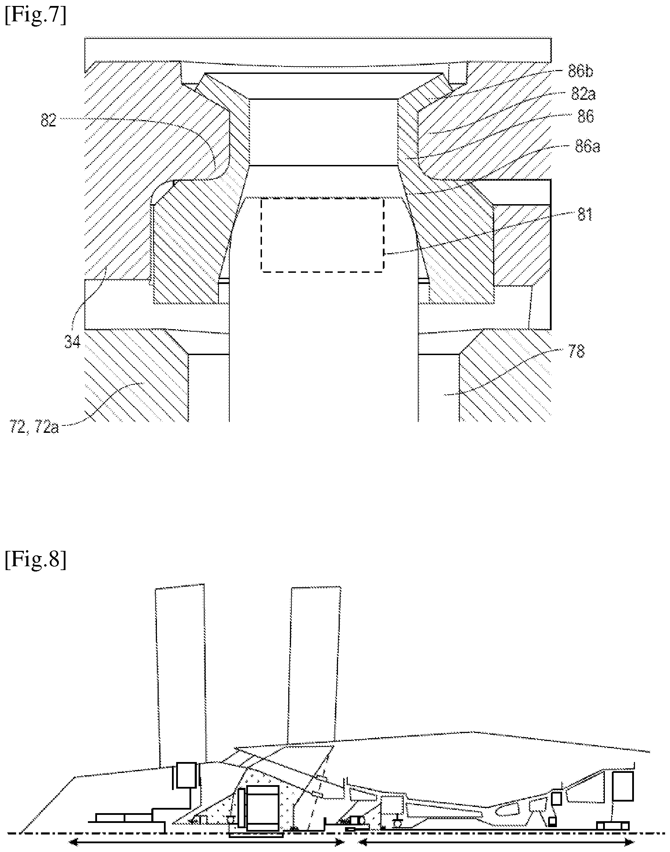

Chaque vis 78 être mise en rotation et vissée par l'intermédiaire d'un outil qui doit également avoir une orientation radiale ou quasi radiale par rapport à l'axe A. Selon un aspect de l'invention, le vissage et le dévissage de chaque vis sont réalisés radialement par l'extérieur et non pas par l'intérieur de la turbomachine. L'outil doit donc avoir accès à l'extrémité radialement externe de chaque vis 78 et pouvoir être mis en prise avec cette extrémité. Ainsi, l'outil n'est pas destiné à être mis en pris avec la tête 84 de chaque vis 78 mais au contraire avec l'extrémité libre de la vis, qui comprend par exemple une empreinte 81 en creux, comme cela est schématiquement représenté aux figures 4 et 7.

Cette empreinte 81 peut avoir en section une forme polygonale et par exemple hexagonale de façon à recevoir un embout six pans de l'outil par exemple. En variante, elle pourrait être du type Torx^{®}.

Un outil 83 est schématiquement représenté aux figures 1, 2 et 9 pour réaliser le dévissage des vis 78, ainsi que leur vissage. Cet outil 83 a une forme allongée et est engagé à travers un ou plusieurs des orifices 85 de la turbomachine 10. Ces orifices 85 peuvent être situés sur des éléments de stator de la turbomachine, tels que le carter intermédiaire 44 ou le carter 66 par exemple. Ces orifices 85 sont par exemple des orifices d'endoscopie, c'est-à-dire des orifices qui sont en général utilisés pour de l'inspection de la turbomachine par endoscopie. Naturellement, ces orifices doivent être alignés les uns avec les autres et le plus possible avec les axes des vis 78. La rotation de l'arbre 34 permet d'avoir accès aux vis 78 les unes après les autres à travers les orifices 85.

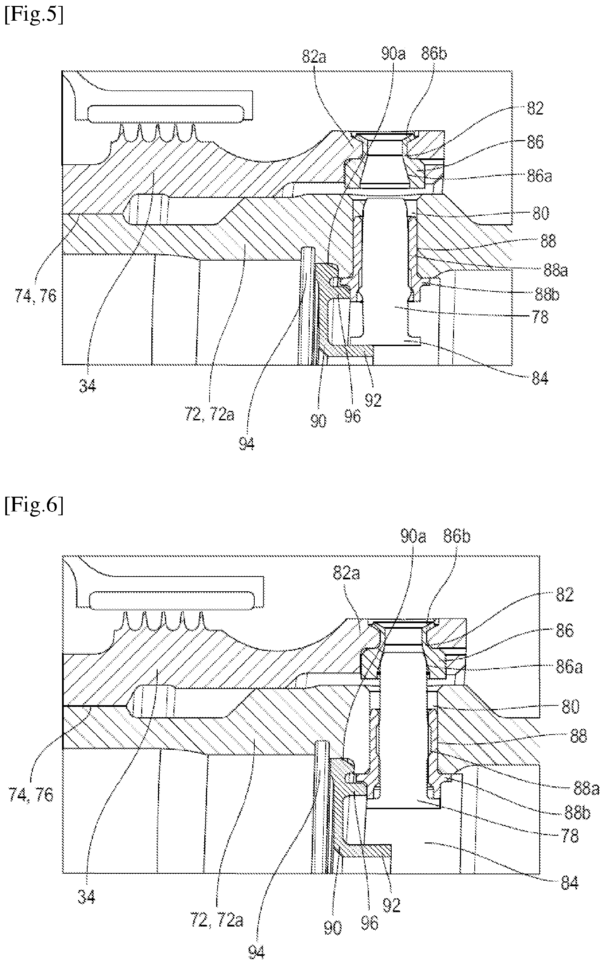

Dans l'exemple représenté, une bague 86 est fixée dans chaque orifice 82 de l'arbre 34. Cette bague 86 comprend un alésage interne qui présente une portion tronconique 86a configurée pour coopérer avec l'extrémité libre de la vis 78 en vue du centrage de cette dernière dans l'orifice 82. La portion 86a est évasée radialement vers l'intérieur. La bague 86 est ici fixée par sertissage dans l'orifice 82 et comprend à son extrémité radialement externe un rebord périphérique 86b destiné à être déformé plastiquement et plaqué contre un rebord interne 82a de l'orifice 82 (voir figure 5 par exemple). On comprend donc que la bague 86 est insérée radialement par l'intérieur dans l'orifice 82 puis est sertie dans l'orifice par déformation de son rebord 86b.

De plus, dans l'exemple représenté, chaque vis 78 n'est pas directement vissée dans un des orifices 80 mais dans une douille 88 montée dans cet orifice. Cette douille 88 a un filetage interne 88a de vissage de la vis 78 et comprend en outre à son extrémité radialement interne une collerette annulaire 88b d'appui sur un bossage de l'arbre 72 (voir figure 5 par exemple). La douille 88 peut être montée par frettage dans l'orifice 80 et comprendre une surface cylindrique externe montée serrée dans une surface cylindrique interne de l'orifice 80. La douille 88 est engagée radialement depuis l'intérieur dans l'orifice 80 jusqu'à ce que la collerette 88b prenne appui sur le bossage de l'arbre 72. La douille 88 et la bague 86 peuvent être changées en cas d'usure de leur pas de vis de façon à ce pas avoir à changer l'arbre complet. Avantageusement, une virole de retenue 90 est montée à l'intérieur de l'arbre 72 et a pour fonction d'assurer une retenue des vis 78 et de les rendre ainsi imperdables lorsqu'elles sont dans leurs positions dévissées.

La virole 90 a une forme annulaire et s'étend autour de l'axe A. Elle comprend un premier rebord cylindrique 92 qui est orienté vers l'aval et qui s'étend au moins en partie en regard des orifices 80, 82 et qui est configuré pour retenir radialement les vis 78 lorsqu'elles sont dans leurs positions dévissées, comme cela est illustré aux figures 4 et 5.

La virole 90 comprend de préférence une surface cylindrique externe 90a de centrage configurée pour coopérer avec une surface cylindrique interne de l'arbre 72 pour assurer le centrage de la virole au montage. La surface cylindrique interne de l'arbre 72 peut comporter une gorge annulaire 94 de montage d'un jonc annulaire (non représenté) de retenue axiale de la virole 90 par exemple contre le bossage précité de l'arbre 72.

La virole 90 comprend en outre un second rebord cylindrique 94 qui est orienté vers l'aval et s'étend en partie autour de ce bossage. Les collerettes 88b des douilles 88 sont intercalées radialement entre le bossage et ce rebord 96, ce qui assure une retenue radiale des douilles dans les orifices 80 et les rend également imperdables ou les immobilise radialement.

Les figures 4 et 5 représentent les vis 78 dans leurs positions dévissées de déblocage des arbres 34, 72. On constate que les têtes 84 des vis 78 sont en appui radial sur le rebord 92 de la virole 90 et que leurs extrémités libres sont à distance radiale des orifices 82. Les vis 78 ne gênent donc pas le déplacement des arbres 34, 72 l'un par rapport à l'autre et le désengagement axial des cannelures 74 les unes des autres.

Les figures 6 et 7 représentent les vis 78 dans leurs positions vissées de blocage axial des arbres 34, 72. On constate que les têtes 84 des vis 78 sont à distance radiale du rebord 92 de la virole 90 et que leurs extrémités libres sont engagées dans les bagues 86 des orifices 82. Les vis 78 empêchent le déplacement des arbres 34, 72 l'un par rapport à l'autre et le désengagement axial des cannelures 74 les unes des autres.

En ce qui concerne les cannelures 74, 76, les figures 2 et 3 notamment permettent de constater qu'elles sont situées à l'extérieur de l'enceinte 50 de lubrification du réducteur 36, et plus exactement en aval de celle-ci.

Dans l'exemple représenté, les cannelures 74, 76 sont situées axialement entre deux joints annulaires d'étanchéité 98, 100 de l'enceinte 50, à savoir les deux joints situés à l'extrémité aval de l'enceinte 50 et montés entre le capot 58 et l'arbre d'entrée 34.

Le joint d'étanchéité 98 situé à l'amont des cannelures 74, 76 est un joint radial segmenté, et le joint d'étanchéité 100 situé à l'aval des cannelures est un joint à labyrinthe. Les vis 78 sont situées en aval des cannelures 74, 76 et des joints 98, 100, le joint 100 étant intercalé axialement entre les cannelures et les vis 78.

Les figures 2 et 3 permettent également de constater que les diamètres des étanchéités 98, 100, des cannelures 74, 76 et des vis 78 sont relativement proches les uns des autres.

On se réfère désormais aux figures 8 à 10c qui illustrent des étapes de démontage de la turbomachine 10 de la figure 1. On comprendra que le montage ou remontage de la turbomachine peut être utilisée en répétant ces opérations dans l'ordre inverse.

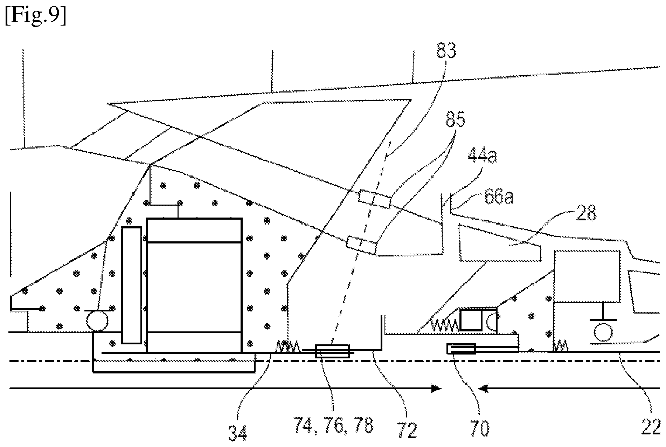

La figure 8 est similaire à la figure 1 et la figure 9 est une vue à plus grande échelle dans laquelle sont indiquées certaines références de l'ensemble d'arbres selon l'invention décrit dans ce qui précède.

Une première étape du procédé consiste à insérer l'outil 83 à travers les orifices 85 de la turbomachine 10 puis à dévisser les vis 78, les unes après les autres de façon à les amener de leurs positions vissées à leurs positions dévissées. Cela peut être réalisé au moyen d'un seul outil engagé dans un seul orifice 85 ou dans une seule série d'orifices 85 alignés si les arbres 34, 72 sont déplacés en rotation après chaque dévissage de façon à ce que la prochaine vis à dévisser soit alignée avec le ou les orifices 85. En variante, dans le cas où il y aurait autant d'orifices 85 ou séries d'orifices 85 que de vis 78, un même outil 83 pourrait être inséré à tour de rôle dans chacun de ces orifices ou chacune de ces séries d'orifices.

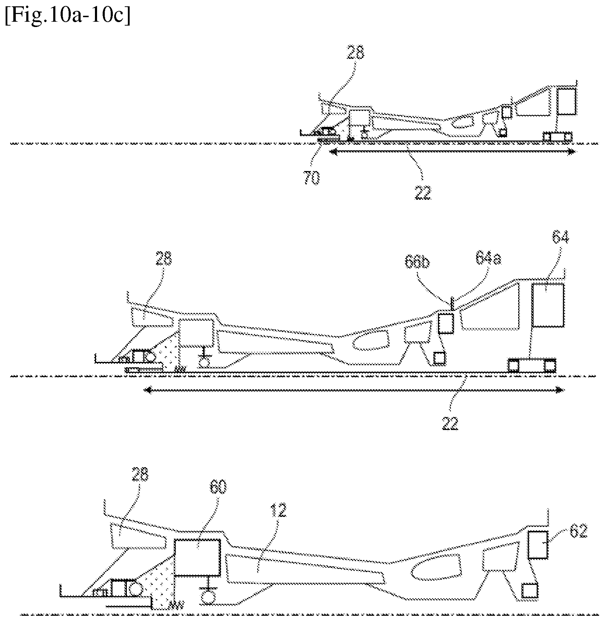

Les vis 78 sont alors en position dévissée donc les cannelures 74, 76 et les arbres 34, 72 sont libres de se déplacer axialement l'un par rapport à l'autre ou les unes par rapport aux autres. Cela signifie que le troisième module 32 peut être dissocié du second module 28. Pour cela, il peut être nécessaire de désolidariser les brides 44a, 66a l'une de l'autre. Après cette désolidarisation, toute la partie amont de la turbomachine, qui inclut le module 28 mais aussi le réducteur 36, la soufflante 48 et le carter intermédiaire 44, peut être retirée du reste de la turbomachine illustrée à la figure 10a. On comprend ainsi que l'enceinte 50 reste fermée, ce qui limite le risque de fuite d'huile.

Une autre étape du procédé consiste à dévisser l'écrou 70 de solidarisation des deux modules 28, 22. Il est dévissé et retiré depuis l'amont. On obtient alors la situation telle qu'illustrée à la figure 10b.

Une étape suivante du procédé consiste à désolidariser les brides 66b, 64a l'une de l'autre et à retirer axialement depuis l'aval le carter d'échappement 64 (figure 10c). On peut ensuite retirer le premier module 22 par translation axiale vers l'aval vis-à-vis du second module 28 ainsi que du module HP 12 et des carters inter-compresseur 60 et inter-turbine 62.

Les différents modules de la turbomachine 10 sont désolidarisés les uns des autres et peuvent subir des opérations de maintenance avec le remontage de la turbomachine.

## Revendications

1. Ensemble d'arbres (34, 72) pour une turbomachine d'aéronef, cet ensemble comportant :
- un premier arbre (72) comportant des cannelures externes (76) orientées parallèlement à un axe (A) de rotation de l'arbre,
- un second arbre (34) comportant des cannelures internes (74) complémentaires desdites cannelures externes, ce second arbre étant engagé axialement sur le premier arbre et ces arbres étant solidaires en rotation par engagement de leurs cannelures, et
- un système de blocage axial des arbres l'un vis-à-vis de l'autre,
**caractérisé en ce que** ledit système comprend des vis (78) qui sont orientées radialement par rapport audit axe, chacune de ces vis étant vissée dans un premier orifice (80) de l'un des arbres et comportant une extrémité libre apte à être engagée dans un second orifice (82) de l'autre des arbres, chacune de ces vis étant mobile par vissage depuis une première position radiale dans laquelle son extrémité libre est engagée dans ledit second orifice et assure un blocage axial des arbres, et une seconde position radiale dans laquelle son extrémité libre est désengagée dudit second orifice et assure un déblocage axial des arbres.

2. Ensemble selon la revendication 1, dans lequel la première position est une position radialement externe, et la seconde position est une position radialement interne.

3. Ensemble selon la revendication 1 ou 2, dans lequel chacune des vis (78) comprend une extrémité radialement interne portant une tête d'appui (84), et une extrémité radialement externe libre comportant une empreinte (81) en creux configurée pour recevoir un outil (83) de vissage/dévissage de la vis.

4. Ensemble selon l'une des revendications précédentes, dans lequel une bague (86) est fixée dans chacun desdits seconds orifices (82) et comprend un alésage interne qui présente une portion tronconique (86a) configurée pour coopérer avec ladite extrémité libre de la vis (78) en vue du centrage de cette dernière dans ledit second orifice.

5. Ensemble selon la revendication précédente, dans lequel chaque bague (86) est sertie dans le second orifice (82) correspondant.

6. Ensemble selon l'une des revendications précédentes, dans lequel une douille (88) est montée dans chacun desdits premiers orifices (80) et comprend un filetage interne (88a) de vissage de la vis (78) correspondante.

7. Ensemble selon la revendication précédente, dans lequel chaque douille (88) comprend une collerette annulaire externe (88b) d'appui sur l'arbre (72) correspondant.

8. Ensemble selon l'une des revendications précédentes, dans lequel une virole de retenue (90) est montée à l'intérieur du premier arbre (72) et comprend un premier rebord cylindrique (92) qui s'étend au moins en partie en regard desdits premiers et seconds orifices (80, 82) et qui est configuré pour retenir radialement les vis (78) lorsqu'elles sont dans leurs secondes positions respectives.

9. Ensemble selon la revendication précédente, en dépendance de la revendication 7, dans lequel la collerette (88b) de chaque douille (88) est intercalée radialement entre l'arbre (72) et un second rebord cylindrique (96) de la virole (90).

10. Ensemble selon la revendication 8 ou 9, dans lequel la virole (90) comprend une surface cylindrique externe (90a) de centrage configurée pour coopérer avec une surface cylindrique interne du premier arbre (72), cette surface cylindrique interne comportant une gorge annulaire (94) de montage d'un jonc annulaire de retenue axiale de la virole vis-à-vis du premier arbre.

11. Turbomachine (10) d'aéronef, comportant au moins un ensemble selon l'une des revendications précédentes.

12. Turbomachine (10) d'aéronef selon la revendication 11, dans laquelle ledit ensemble est entouré par au moins un carter de stator (44, 66) qui comprend au moins un orifice radial (85) configuré pour autoriser le passage d'un outil (83) de vissage/dévissage desdites vis (78).

## Patentansprüche

1. Wellenbaugruppe (34, 72) für ein Turbotriebwerk eines Luftfahrzeugs, wobei diese Baugruppe umfasst:
- eine erste Welle (72), die äußere Kerbverzahnungen (76) umfasst, die parallel zu einer Drehachse (A) der Welle ausgerichtet sind,
- eine zweite Welle (34), die zu den äußeren Kerbverzahnungen ergänzende innere Kerbverzahnungen (74) umfasst, wobei diese zweite Welle axial in Eingriff auf der ersten Welle steht, und diese Wellen durch Eingreifen ihrer Kerbverzahnungen drehfest miteinander verbunden sind, und
- ein axiales Sperrsystem der Wellen zueinander,
**dadurch gekennzeichnet, dass** das System Schrauben (78) umfasst, die in Bezug auf die Achse radial ausgerichtet sind, wobei jede dieser Schrauben in eine erste Öffnung (80) der einen der Wellen geschraubt ist, und ein freies Ende umfasst, das imstande ist, in eine zweite Öffnung (82) der anderen der Wellen in Eingriff gebracht zu werden, wobei jede dieser Schrauben durch Schrauben aus einer ersten radialen Position, in der ihr freies Ende in der zweiten Öffnung in Eingriff gebracht ist, und für eine axiale Sperre der Wellen sorgt, und einer zweiten radialen Position, in der ihr freies Ende aus der zweiten Öffnung freigegeben ist, und für eine axiale Freigabe der Wellen sorgt, beweglich ist.

2. Baugruppe nach Anspruch 1, wobei die erste Position eine radial äußere Position ist, und die zweite Position eine radial innere Position ist.

3. Baugruppe nach Anspruch 1 oder 2, wobei jede der Schrauben (78) ein radial inneres Ende umfasst, das einen Stützkopf (84) trägt, und ein freies radial äußeres Ende, das einen versenkten Abdruck (81) umfasst, der konfiguriert ist, um ein Werkzeug (83) zum Einschrauben/Herausschrauben der Schraube aufzunehmen.

4. Baugruppe nach einem der vorstehenden Ansprüche, wobei ein Ring (86) in jeder der zweiten Öffnungen (82) befestigt ist und eine innere Bohrung umfasst, die einen kegelstumpfförmigen Abschnitt (86a) aufweist, der konfiguriert ist, um mit dem freien Ende der Schraube (78) in Hinblick auf die Zentrierung dieser letzteren in der zweiten Öffnung zusammenzuwirken.

5. Baugruppe nach dem vorstehenden Anspruch, wobei jeder Ring (86) in der entsprechenden zweiten Öffnung (82) eingepresst ist.

6. Baugruppe nach einem der vorstehenden Ansprüche, wobei eine Hülse (88) in jeder der ersten Öffnungen (80) montiert ist und ein Innengewinde (88a) zum Schrauben der entsprechenden Schraube (78) umfasst.

7. Baugruppe nach dem vorstehenden Anspruch, wobei jede Hülse (88) einen ringförmigen äußeren Stützkragen (88b) auf der entsprechenden Welle (72) umfasst.

8. Baugruppe nach einem der vorstehenden Ansprüche, wobei ein Halteklemmring (90) im Inneren der ersten Welle (72) montiert ist und einen ersten zylindrischen Rand (92) umfasst, der sich mindestens teilweise gegenüber der ersten und zweiten Öffnung (80, 82) erstreckt, und der konfiguriert ist, um die Schrauben (78) radial zurückzuhalten, wenn sie in ihren jeweiligen zweiten Positionen sind.

9. Baugruppe nach dem vorstehenden Anspruch, in Abhängigkeit von Anspruch 7, wobei der Kragen (88b) einer jeden Hülse (88) radial zwischen der Welle (72) und einem zweiten zylindrischen Rand (96) des Klemmrings (90) eingelegt ist.

10. Baugruppe nach Anspruch 8 oder 9, wobei der Klemmring (90) eine äußere zylindrische Oberfläche (90a) zum Zentrieren umfasst, die konfiguriert ist, um mit einer inneren zylindrischen Oberfläche der ersten Welle (72) zusammenzuwirken, wobei diese innere zylindrische Oberfläche eine Ringnut (94) zum Montieren einer ringförmigen Spange zum axialen Rückhalten des Klemmrings gegenüber der ersten Welle umfasst.

11. Turbotriebwerk (10) eines Luftfahrzeugs, das mindestens eine Baugruppe nach einem der vorstehenden Ansprüche umfasst.

12. Turbotriebwerk (10) eines Luftfahrzeugs nach Anspruch 11, wobei die Baugruppe von mindestens einem Statorgehäuse (44, 66) umgeben ist, das mindestens eine radiale Öffnung (85) umfasst, die konfiguriert ist, um den Durchgang eines Werkzeugs (83) zum Einschrauben/Herausschrauben der Schrauben (78) zu ermöglichen.

## Claims

1. A set of shafts (34, 72) for an aircraft turbomachine, the set comprising:
- a first shaft (72) comprising external splines (76) oriented parallel to an axis (A) of rotation of the shaft,
- a second shaft (34) comprising internal splines (74) complementary to said external splines, this second shaft being axially engaged with the first shaft and these shafts rotating as one by engagement of their splines, and
- a system for axially locking the shafts with respect to one another,
**characterised in that** said system comprises screws (78) which are oriented radially with respect to said axis, each of these screws being screwed into a first orifice (80) of one of the shafts and comprising a free end capable of being engaged in a second orifice (82) of the other of the shafts, each of these screws being movable by screwing from a first radial position in which its free end is engaged in the said second orifice and ensures axial locking of the shafts, and a second radial position in which its free end is disengaged from said second orifice and ensures axial unlocking of the shafts.

2. The set of claim 1, wherein the first position is a radially external position, and the second position is a radially internal position.

3. The set according to claim 1 or 2, wherein each of the screws (78) comprises a radially internal end carrying a bearing head (84), and a radially external free end comprising a recessed cavity (81) configured to receive a tool (83) for screwing/unscrewing the screw.

4. The set according to any one of the preceding claims, wherein a ring (86) is fixed in each of said second orifices (82) and comprises an internal bore which has a frusto-conical segment (86a) configured to cooperate with said free end of the screw (78) for centering the latter in said second orifice.

5. The set according to the preceding claim, wherein each ring (86) is crimped into the corresponding second orifice (82).

6. The set according to one of the preceding claims, wherein a socket (88) is mounted in each of said first orifices (80) and comprises an internal thread (88a) for screwing in the corresponding screw (78).

7. The set according to the preceding claim, wherein each socket (88) comprises an external annular collar (88b) for bearing on the corresponding shaft (72).

8. The set according to one of the preceding claims, wherein a retaining shell (90) is mounted inside the first shaft (72) and comprises a first cylindrical rim (92) which extends at least partly opposite said first and second orifices (80, 82) and which is configured to radially retain the screws (78) when in their respective second positions.

9. The set according to the preceding claim, in dependence on claim 7, wherein the collar (88b) of each socket (88) is radially interposed between the shaft (72) and a second cylindrical rim (96) of the shell (90).

10. The set according to claim 8 or 9, wherein the shell (90) comprises an external cylindrical centering surface (90a) configured to cooperate with an internal cylindrical surface of the first shaft (72), this internal cylindrical surface comprising an annular groove (94) for mounting an annular ring for axially retaining the shell relative to the first shaft.

11. An aircraft turbomachine (10), comprising at least one set according to one of the preceding claims.

12. The aircraft turbomachine (10) according to claim 11, wherein said set is surrounded by at least one stator casing (44, 66) which comprises at least one radial orifice (85) configured to allow the passage of a tool (83) for screwing/unscrewing said screws (78).
